# EUROPÄISCHE PATENTANMELDUNG

(11) **EP 2 341 436 A2**
(43) Veröffentlichungstag der Anmeldung: **06.07.2011**
(21) Anmeldenummer: 10194472.6
(22) Anmeldetag: 10.12.2010
(51) Int. Cl.: G06F 11/07

(54) **Verfahren und Einrichtung zur Durchführung des Verfahrens zum Analysieren von Fehlereffekten des Betriebs einer oder mehrerer elektronischer Einheiten eines Kraftfahrzeugs**

(30) Priorität: 21.12.2009 DE 102009059791
(71) Anmelder: Continental Automotive GmbH, 30165 Hannover (DE)
(72) Erfinder: Hormel, Klaus-Martin, 35606, Solms (DE)

(57) **Zusammenfassung**

Verfahren und Einrichtung zur Durchführung des Verfahrens zum Analysieren von Fehlereffekten des Betriebs einer oder mehrerer elektronischer Einheiten eines Kraftfahrzeugs

Die Erfindung bezieht sich auf ein Verfahren und eine Einrichtung zur Durchführung des Verfahrens zum Analysieren von Fehlereffekten des Betriebs einer oder mehrerer elektronischer Einheiten eines Kraftfahrzeugs, insbesondere von Geräten einer Multimediaeinheit, der von einem Hauptprozessor 1 Signale zur Durchführung von Ausführungsschritten zugeleitet werden. Die Daten der Ausführungsschritte des Programms des Hauptprozessors 1 werden einem EEPROM zugeführt und von diesem nach dem FIFO-Verfahren gespeichert, wobei die ältesten gespeicherten Daten von den neu zugeführten Daten überschrieben werden und wobei die in dem EEPROM gespeicherten Daten aus dem EEPROM über eine Ausleseschnittstelle 8 ausgelesen werden.

## Beschreibung

### Beschreibung

Verfahren und Einrichtung zur Durchführung des Verfahrens zum Analysieren von Fehlereffekten des Betriebs einer oder mehrerer elektronischer Einheiten eines Kraftfahrzeugs

Die Erfindung bezieht sich auf ein Verfahren und eine Einrichtung zur Durchführung des Verfahrens zum Analysieren von Fehlereffekten des Betriebs einer oder mehrerer elektronischer Einheiten eines Kraftfahrzeugs, insbesondere von Geräten einer Multimediaeinheit, der von einem Hauptprozessor Signale zur Durchführung von Ausführungsschritten zugeleitet werden.

Bei derartigen Geräten wie z. B. Autoradios und Multimediaeinheiten kommt es immer wieder vor, dass zunächst unerklärliche Fehlereffekte auftreten. Um diese zu analysieren sollte sofort bei Auftreten des Fehlereffekts dieser überprüft werden. Dazu müsste eine Werkstatt aufgesucht werden, was meist so unmittelbar nicht möglich ist.

Durch das Ausschalten der Zündung oder sogar ein Abklemmen der Batterie werden die Verhältnisse gegenüber der Situation beim Auftreten des Fehlereffekts häufig so geändert, dass dieser nicht mehr sofort analysiert werden kann. Es muss dann mittels der Versuch-und-Irrtum-Methode versucht werden den Fehlereffekt nachzustellen. Dabei muss der Anwender des Kraftfahrzeugs befragt werden, was er wann in welcher Reihenfolge getan hat, bevor der Fehlereffekt auftrat.

Dies ist ein langwieriger und nicht immer zielführender Prozess.

Aufgabe der Erfindung ist es daher ein Verfahren und eine Einrichtung zur Durchführung des Verfahrens von Fehlereffekten der eingangs genannten Art zu schaffen, das eine schnelle und effektive Fehleranalyse ermöglicht.

Diese Aufgabe wird für Verfahren erfindungsgemäß dadurch gelöst, dass die Daten der Ausführungsschritte des Programms des Hauptprozessors (CPU) einem EEPROM (elektrisch löschbarer; programmierbarer nur-lese-Speicher) zugeführt und in diesem nach dem FIFO-Verfahren (FIFO: first-in-first-out) gespeichert werden, wobei die ältesten gespeicherten Daten von den neu zugeführten Daten überschrieben werden und wobei die in dem EEPROM gespeicherten Daten aus dem EEPROM über eine Ausleseschnittstelle ausgelesen werden.

Durch dieses Verfahren werden zumindest alle wichtigen ausgeführten Vorgänge protokolliert und in dem EEPROM für einige Stunden, eventuell sogar für einige Tage gespeichert und sind für eine Analyse dann in einer Werkstatt abrufbar.

Ggf. unter Hinzuziehung einer Situationsbeschreibung des Fahrers ist dann der Fehler schnell erroierbar. Teilweise kann ein Fehler schon anhand gespeicherter Daten direkt erkannt werden.

Damit ist eine Fehleranalyse mit hoher Effektivität und Analysequalität erreicht.

Vorzugsweise werden die Daten der von dem Hauptprozessor zugeführten Ausführungsschritte des Programms des Hauptprozessors einem Flash-EEPROM (elektrisch löschbarer; programmierbarer nur-lese-Speicher) zugeführt und die in dem Flash-EEPROM gespeicherten Daten aus dem Flash-EEPROM über eine Ausleseschnittstelle ausgelesen.

Die Aufgabe wird von einer Einrichtung zur Durchführung des Verfahrens zum Analysieren von Fehlereffekten des Betriebs einer oder mehrerer elektronischer Einheiten eines Kraftfahrzeugs, insbesondere von Geräten einer Multimediaeinheit erfindungsgemäß dadurch gelöst, dass von einem Hauptprozessor Signale zur Durchführung von Ausführschritten den elektronischen Geräten sowie einem EEPROM zuführbar sind und in dem EEPROM nach dem FIFO-Verfahren speicherbar sind, wobei die in dem EEPROM gespeicherten Daten über eine Ausleseschnittstelle auslesbar sind.

Damit sind die o. g. Vorteile erzielbar.

Zur Ansteuerung des Hauptprozessors können über eine oder mehrere Eingabeschnittstellen dem Hauptprozessor Eingabeinformationen zuleitbar sein.

Diese Eingabeinformationen können von einer Eingabeeinrichtung oder von einem mit der Eingabeschnittstelle verbundenen Datenbus zugeleitet werden.

Vorzugsweise sind von einem zweiten EEPROM Daten der Systemfunktionen eines Betriebssystems fest speicherbar und dem Hauptprozessor zuführbar.

Dabei können der erste EEPROM und/oder der zweite EEPROM ein Flash-EEPROM sein.

Zur Ansteuerung der elektronischen Geräte können die Signale zur Durchführung von Ausführschritten von dem Hauptprozessor über eine oder mehrere Ausgabeschnittstellen einem oder mehreren elektronischen Geräten zuleitbar sein.

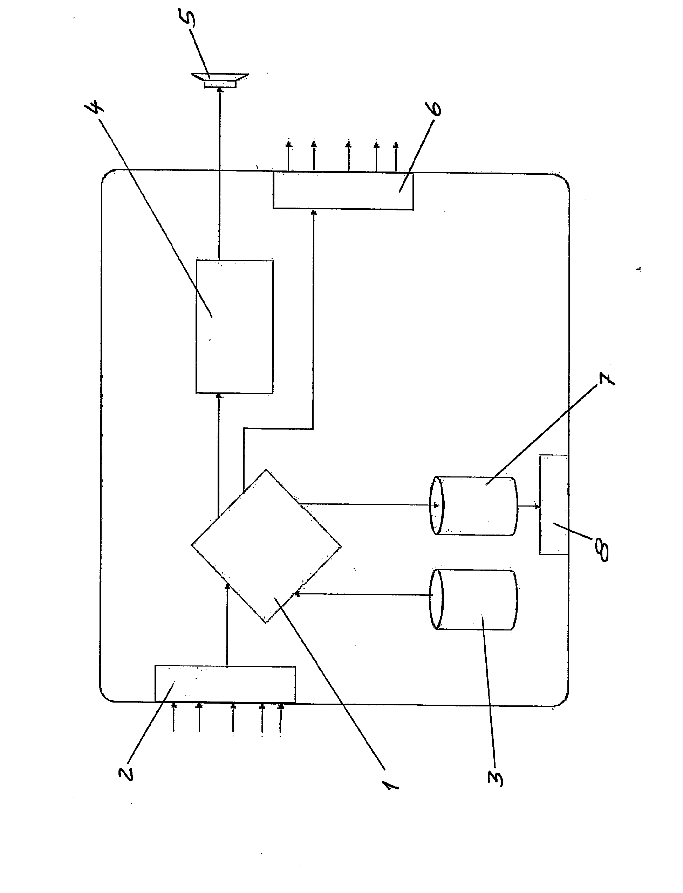

Ein Ausführungsbeispiel der Erfindung ist in der Zeichnung dargestellt. Die einzige Figur der Zeichnung zeigt eine Prinzipdarstellung einer Einrichtung zur Durchführung eines Verfahrens zum Analysieren von Fehlereffekten.

Die dargestellte Einrichtung weist einen Hauptprozessor 1 auf, dem von einer Eingabeschnittstelle 2 her Eingabeinformationen zuleitbar sind, die der Eingabeschnittstelle 2 z.B. von einer manuellen Eingabeeinrichtung und/oder einem Datenbus zuführbar sind.

Entsprechend dem in einem zweiten Flash-EEPROM 3 gespeicherten Daten der Systemfunktionen eines Betriebssystems, die dem Hauptprozessor 1 zuleitbar sind, erfolgt eine Verarbeitung der von der Eingabeschnittstelle 2 her zugeführten Eingabeinformationen im Hauptprozessor 1 und eine Generierung von entsprechenden Signalen zur Durchführung von Ausführschritten durch elektronische Geräte.

Diese Signale werden zur Lautstärkensteuerung über eine Lautstärken-Endstufe 4 einem Lautsprecher 5 zugeführt.

Weitere dieser Signale werden einer Ausgabeschnittstelle 6 zugeleitet, an die elektronische Geräte wie z.B. ein Display anschließbar sind.

Alle von dem Hauptprozessor 1 aufbereiteten Daten, die den elektronischen Geräten zugeführt werden, werden auch einem ersten Flash-EEPROM 7 zugeführt und in diesem nach dem FIFO-Verfahren gespeichert.

Dabei werden die ältesten Daten durch die neuen Daten überschrieben, so dass immer die aktuellen Daten der letzten Betriebsstunden oder Betriebstage gespeichert sind.

Über eine Ausleseschnittstelle 8 können diese Daten dann für eine Fehleranalyse ausgelesen werden.

## Patentansprüche

1. Verfahren zum Analysieren von Fehlereffekten des Betriebs einer oder mehrerer elektronischer Einheiten eines Kraftfahrzeugs, insbesondere von Geräten einer Multimediaeinheit, der von einem Hauptprozessor Signale zur Durchführung von Ausführungsschritten zugeleitet werden, **da** - **durch gekennzeichnet** , dass die Daten der Ausführungsschritte des Programms des Hauptprozessors (1) einem EEPROM zugeführt und in diesem nach dem FIFO-Verfahren gespeichert werden, wobei die ältesten gespeicherten Daten von den neu zugeführten Daten überschrieben werden und wobei die in dem EEPROM gespeicherten Daten aus dem EEPROM über eine Ausleseschnittstelle (8) ausgelesen werden.

2. Verfahren nach Anspruch 1, **dadurch gekenn** - **zeichnet** , dass die Daten der von dem Hauptprozessor (1) den elektronischen Einheiten durchgeführten Ausführungsschritte des Programms des Hauptprozessors (1) einem Flash-EEPROM (7) zugeführt werden und die in dem Flash-EEPROM (7) gespeicherten Daten aus dem Flash-EEPROM (7) über eine Ausleseschnittstelle (8) ausgelesen werden.

3. Einrichtung zur Durchführung des Verfahrens nach einem der vorhergehenden Ansprüche zum Analysieren von Fehlereffekten des Betriebs einer oder mehrerer elektronischer Einheiten eines Kraftfahrzeugs, insbesondere von Geräten einer Multimediaeinheit, **dadurch gekennzeichnet , dass** von einem Hauptprozessor (1) Signale zur Durchführung von Ausführschritten den elektronischen Geräten sowie einem EEPROM zuführbar sind und in dem EEPROM nach dem FIFO-Verfahren speicherbar sind, wobei die in dem EEPROM gespeicherten Daten über eine Ausleseschnittstelle (8) auslesbar sind.

4. Einrichtung nach Anspruch 3, **dadurch gekennzeichnet , dass** über eine oder mehrere Eingabeschnittstellen (2) dem Hauptprozessor (1) Eingabeinformationen zuleitbar sind.

5. Einrichtung nach einem der Ansprüche 3 und 4, **dadurch gekennzeichnet , dass** von einem zweiten EEPROM Daten der Systemfunktionen eines Betriebssystems fest speicherbar und dem Hauptprozessor (1) zuführbar sind.

6. Einrichtung nach einem der Ansprüche 3 bis 5, **dadurch gekennzeichnet , dass** der erste EEPROM und/oder der zweite EEPROM ein Flash-EEPROM (7, 3) ist.

7. Einrichtung nach einem der Ansprüche 3 bis 6, **dadurch gekennzeichnet , dass** die Signale zur Durchführung von Ausführschritten von dem Hauptprozessor (1) über eine oder mehrere Ausgabeschnittstellen (6) einem oder mehreren elektronischen Geräten zuleitbar sind.
